# DEMANDE DE BREVET EUROPEEN

(11) **EP 4 429 101 A1**
(43) Date de publication de la demande: **11.09.2024**
(21) Numéro de dépôt: 23315046.5
(22) Date de dépôt: 10.03.2023
(51) Int. Cl.: H02S 20/10, H02S 30/00

(54) **INSTALLATION PHOTOVOLTAÏQUE DESTINÉE À ÊTRE INSTALLÉE SUR DES SOLS INCLINÉS**

(71) Demandeur: TotalEnergies OneTech, 92400 Courbevoie (FR)
(72) Inventeur: Matrat, David, 92400 Courbevoie (FR); Cassagne, Valérick, 92400 Courbevoie (FR)
(74) Mandataire: Innovincia

(57) **Abrégé**

L'invention concerne une installation photovoltaïque (1) destinée à recouvrir au moins partiellement un sol incliné (2) et comportant au moins deux modules photovoltaïques (4) supportés par une structure de support, caractérisée en ce qu'au moins une partie des bords des modules photovoltaïques (4) sont reliés entre eux par un collecteur d'eau (6) destiné à canaliser de l'eau de pluie ; et en ce que la structure de support comporte d'une part des piquets (10) avec un élément en appui (12) qui est en contact avec le sol incliné (2) et d'autre part un moyen de fixation (8) qui raccorde une portion du collecteur d'eau (6) avec un bord latéral d'au moins un des au moins deux modules photovoltaïques (4), ladite portion du collecteur d'eau (6) étant située en dessous du bord latéral du au moins un des deux modules photovoltaïques (4).

## Description

La présente invention concerne une installation photovoltaïque, notamment destinée à être installée sur des sols inclinés de type talus ou terril. Les terrils sont des monticules de résidus de par l'exploitation minière, tels que des résidus rocheux comme par exemple des schistes, et en plus petite quantité, des grès carbonifères et des résidus divers quelquefois pollués. Ces terrils peuvent atteindre des dimensions importantes et peuvent être répartis sur de larges surfaces. Ces larges surfaces ainsi dédiées au seul stockage des déchets sont très peu valorisées. Ces monticules sont en outre exposés à la pluie. L'eau de pluie peut s'infiltrer dans le monticule ou raviner sur ses pentes et ainsi affecter la qualité des eaux souterraines du fait de la potentielle présence d'éléments contaminants dans ces résidus. L'eau de pluie infiltrée doit alors être traitée avant d'être réintroduite dans les nappes phréatiques, ce qui est coûteux. Un problème similaire peut également être présent pour des sols inclinés avec des sols contaminés.

Afin remédier à ce problème de contamination des eaux de pluie tout en valorisant ces larges surfaces, il est connu de recouvrir les monticules de bâches d'étanchéité sur laquelle sont fixés par collage des modules photovoltaïques interconnectés entre eux, comme expliqué par exemple dans la demande de brevet WO2019234201A1. Les pentes et les bâches des monticules permettent de dévier l'eau de pluie pour la collecter, l'empêchant ainsi de s'infiltrer. Cependant, une quantité très importante de bâches d'étanchéité est nécessaire pour ce type d'installation photovoltaïque, ce qui en augmente les coûts. Par ailleurs, la dépose d'une telle bâche d'étanchéité sur un sol incliné peut s'avérer chronophage, cette étape peut nécessiter l'intervention de plusieurs personnes afin d'assurer une disposition adéquate de la bâche avant d'y coller les modules photovoltaïques.

L'invention a pour but de remédier aux inconvénients de l'art antérieur, en proposant une installation photovoltaïque moins coûteuse pour mieux valoriser ces grandes surfaces disponibles dans le cas des terrils de déchets composés de matériaux inertes et non décomposables tout en permettant une collecte efficace de l'eau de pluie.

A cet effet, l'invention concerne une installation photovoltaïque destinée à recouvrir au moins partiellement un sol incliné, l'installation photovoltaïque comportant au moins deux modules photovoltaïques adjacents supportés par une structure de support, caractérisée en ce qu'au moins une partie des bords des modules photovoltaïques sont reliés entre eux par un collecteur d'eau orienté dans le sens de la pente du sol incliné, ledit collecteur d'eau étant destiné à canaliser de l'eau de pluie ; et en ce que la structure de support comporte d'une part des piquets avec un élément en appui qui est en contact avec le sol incliné et d'autre part un moyen de fixation qui raccorde une portion du collecteur d'eau avec un bord latéral d'au moins un des au moins deux modules photovoltaïques, ladite portion du collecteur d'eau étant située en dessous du bord latéral du au moins un des deux modules photovoltaïques.

Agencer un tel collecteur d'eau entre les bords des modules photovoltaïques adjacents de l'installation permet de réaliser des économies par rapport aux installations connues dans l'état de l'art. En effet, plutôt que de coller des modules photovoltaïques flexible sur une bâche étanche qui recouvre directement le sol incliné d'un terril de déchets, les modules sont maintenus à distance du sol par une structure de support adaptable au terrain. Le collecteur d'eau qui relie les bords latéraux de deux modules photovoltaïques adjacents permet de collecter l'eau de pluie et empêche celle-ci de s'infiltrer dans le sol incliné sur lequel est agencée l'installation, ce qui permet potentiellement d'éviter une dégradation de la qualité des eaux souterraines du fait de la potentielle présence d'éléments contaminants dans les résidus du sol.

Par ailleurs, l'installation photovoltaïque de l'invention est avantageusement rapide d'installation et présente un faible coût.

Selon un mode de réalisation de l'invention, le moyen de fixation comprend deux platines situées de part et d'autre de la portion du collecteur d'eau et d'un ou des bords latéraux du au moins un des deux modules photovoltaïques de manière à les prendre en sandwich.

Selon un mode de réalisation de l'invention, la platine qui est en contact avec le sol incliné est inclinable par rapport au piquet auquel elle est associée. La platine peut être remplacée par un ergot disposé ou ménagé sur le piquet.

Selon un mode de réalisation de l'invention, les bords des au moins deux modules photovoltaïques présentent des orifices traversants et en ce que les piquets de la structure de support passent à travers lesdits orifices.

Selon un mode de réalisation de l'invention, les orifices sont situés dans les coins des modules photovoltaïques.

Selon un mode de réalisation de l'invention, les orifices sont obtenus par perçage des modules photovoltaïques.

Selon un mode de réalisation de l'invention, le collecteur d'eau comprend une membrane souple et étanche.

Selon un mode de réalisation de l'invention, la membrane d'étanchéité comprend une membrane d'étanchéité bitumineuse.

Selon un mode de réalisation de l'invention, la membrane forme une gouttière.

Selon un autre mode de réalisation de l'invention, le collecteur d'eau comprend une goulotte rigide ou semi-rigide.

Selon un mode de réalisation de l'invention, la goulotte forme une structure monobloc avec l'un des deux modules photovoltaïques adjacents entre lesquels le collecteur d'eau est agencé.

Selon un mode de réalisation de l'invention, la goulotte présente des ouvertures sur une partie de sa périphérie et les piquets de la structure de support passent à travers ces ouvertures.

Selon un mode de réalisation de l'invention, le collecteur d'eau destiné à canaliser de l'eau de pluie présente sur au moins une partie de sa périphérie des portions collantes ou adhésives destinées à être collées ou pressées sur au moins un bord d'un des deux modules photovoltaïques adjacents ainsi qu'une portion non collante ou non adhésive du collecteur d'eau qui est située dans l'écart entre les deux modules photovoltaïques adjacents.

Selon un mode de réalisation de l'invention, les bords latéraux des modules photovoltaïques agencés en périphérie de l'installation sont liés à une membrane étanche qui peut être fixée au sol incliné par tout moyen, tel que des crochets ou des poids. La membrane étanche peut également être partiellement enterrée pour assurer sa fixation au sol.

Selon un mode de réalisation de l'invention, l'installation photovoltaïque comprend plusieurs rangées de modules et les modules d'une rangée supérieure dans le sens de la pente du sol incliné chevauchent partiellement les modules d'une rangée inférieure

### Brève description des figures

L'invention sera mieux comprise à la lecture de la description qui va suivre donnée uniquement à titre d'exemple et faite en se référant aux dessins annexés dans lesquels
[Fig. 1] La figure 1 est une représentation schématique d'une installation photovoltaïque disposée sur un terril de déchets, vue de face ;
[Fig. 2] La figure 2 est une représentation schématique de l'installation de la figure 1 vue de côté dans sens de la pente du sol incliné ;
[Fig. 3] La figure 3 illustre deux modules photovoltaïques de l'installation de la figure 1 vus de haut.
[Fig. 4] La figure 4 illustre un module photovoltaïque vu de face équipé d'un collecteur d'eau selon un mode de réalisation alternatif.

### Description détaillée

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations sans s'écarter de la portée de l'invention, telle que définie par les revendications.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

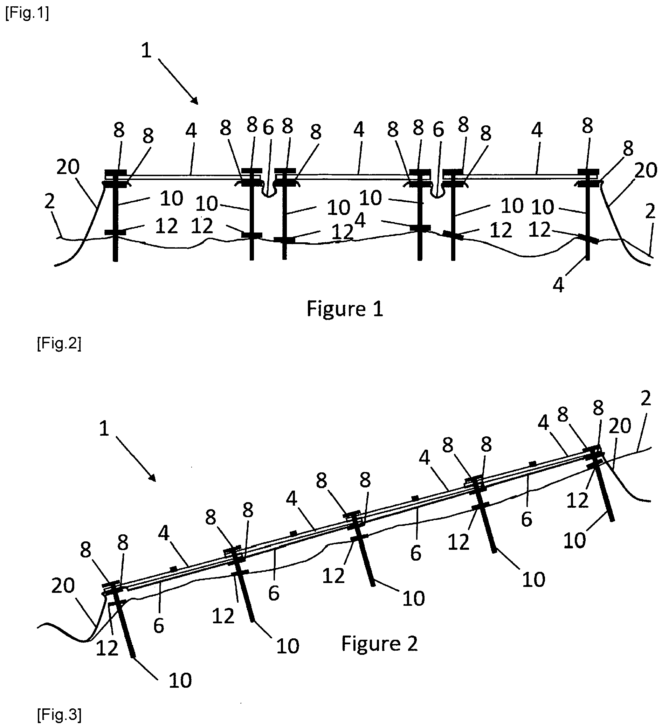

On se tournera en premier lieu vers la figure 1 qui représente une portion d'une installation photovoltaïque 1 disposée sur un sol incliné 2 tel qu'un terril de déchets par exemple. Le terril de déchets est majoritairement composé de déchets inertes solides et de nature minérale, tels que des déchets issus de carrières.

L'installation photovoltaïque 1 comporte au moins deux modules photovoltaïques 4 (ou panneaux photovoltaïques) adjacents, c'est-à-dire agencés l'un à proximité de l'autre de manière à ceux que leurs bords soient proches. Ces modules photovoltaïques 4 sont relativement légers et peuvent être rigides ou flexibles. Les deux modules photovoltaïques 4 comprennent par ailleurs des cellules photovoltaïques qui sont par exemple à base de silicium monocristallin ou multi-cristallin. Ces cellules photovoltaïques sont aptes à convertir le rayonnement du soleil en énergie électrique grâce à l'effet photovoltaïque des composants de ces cellules photovoltaïques.

Les au moins deux modules photovoltaïques 4 de l'installation 1 sont reliés entre eux par un collecteur d'eau 6 orienté dans le sens de la pente du sol incliné 2. Selon le mode de réalisation illustré sur les figures 1 et 2, au moins une partie d'un ou des bords des modules photovoltaïques 4 sont reliées entre elles par un collecteur d'eau 6 orienté dans le sens de la pente du sol incliné 2. Ce collecteur d'eau 6 est destiné à canaliser de l'eau de pluie.

Les modules photovoltaïques 4 de l'installation 1 sont supportés par une structure de support. Cette structure de support comporte d'une part un moyen de fixation 8, qui permet de tenir entre autres une partie des modules photovoltaïques 4, et d'autre part des piquets 10 plantés dans le sol incliné 2 du terril de déchets, ainsi qu'un élément en appui 12 associée à chaque piquet 10, ledit élément en appui 12 étant en contact avec le sol incliné 2. L'élément en appui 12 est par exemple réalisé par une platine 12 mais d'autres éléments tels que des pieds, notamment télescopiques ou dépliables pour s'ajuster aux irrégularités du sol ou à la pente, ou un socle orientable peuvent également être utilisés.

Les piquets 10 permettent d'ancrer la structure de support dans le sol incliné 2. La platine 12 en contact avec le sol incliné 2 et le moyen de fixation 8 qui tient entre autres une partie des modules photovoltaïques 4 peuvent coulisser le long du piquet 10 de manière à ajuster la distance entre le sol incliné 2 et le module photovoltaïque 4. Au sein de l'installation photovoltaïque 1, il est préférable que les modules 4 faisant partie de cette installation 1 forment une surface globalement lisse. Autrement dit, deux modules photovoltaïques 4 adjacents au sein de l'installation 1 sont situés à des hauteurs similaires ; des écarts en hauteur trop importants sont à éviter.

La platine 12 en contact avec le sol incliné 2 peut notamment être inclinable par rapport au piquet 10 auquel elle est associée de sorte qu'elle puisse s'adapter aux irrégularités du terrain et rattraper les jeux de tolérance. Autrement dit, la platine 12 est posée sur le sol incliné 2 de manière à assurer le support de la structure de support, tandis que le piquet 10 n'est pas forcément perpendiculaire par rapport à cette platine 12. Ceci est notamment illustré sur les figures 1 et 2.

La platine 12 peut avoir une forme elliptique, notamment circulaire, ou bien une forme polygonale, notamment une forme carrée.

La platine 12 peut être faite dans un matériau métallique inoxydable. D'autres matériaux peuvent être envisagés.

Afin d'être supportés à distance du sol incliné 2 par les piquets 10, les bords des au moins deux modules photovoltaïques 4 adjacents peuvent présenter des orifices 14 traversants, pour que les piquets 10 de la structure de support passent à travers lesdits orifices 14. Ces orifices 14 peuvent par exemple être obtenus par perçage, ce qui présente un intérêt économique. Alternativement, les orifices 14 peuvent être obtenus par découpe au laser ou par emboutissage. Les orifices 14 peuvent également être moulés dans le module.

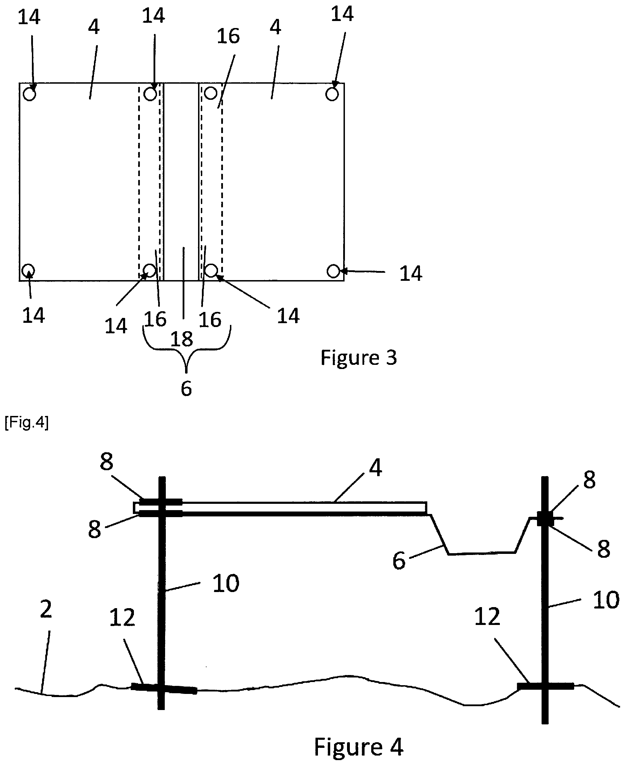

Les orifices 14 peuvent notamment être situés au niveau des coins des modules photovoltaïques. Cette disposition privilégiée des orifices 14 est notamment illustrée sur la figure 3. Il y a par exemple quatre orifices 14 par module photovoltaïque 4.

Dans cette configuration, les coins des modules photovoltaïques 4 sont dépourvus de cellules photovoltaïques. L'absence de cellules photovoltaïques peut également concerner une partie ou la totalité de la périphérie des modules photovoltaïques 4. Dans cette configuration-là, les coins et les bords des modules photovoltaïques 4 sont dépourvus de cellules photovoltaïques, seule une région centrale du module 4 présente alors des cellules photovoltaïques.

Les orifices 14 peuvent avoir une forme elliptique, notamment circulaire, car une telle forme permet de limiter les fissurations dans le module 4. Cependant, d'autres formes peuvent être envisagés pour les orifices 14 dans les modules photovoltaïques 4.

Le moyen de fixation 8 permet de raccorder une portion du collecteur d'eau 6 avec au moins un bord latéral d'au moins un des deux modules photovoltaïques 4. Ainsi, selon un mode de réalisation particulier du moyen de fixation 8 de la structure de support, celui-ci peut comprendre deux platines qui sont situées de part et d'autre de la portion du collecteur d'eau 6 et des bords latéraux des au moins deux modules photovoltaïques 4 juxtaposés de manière à les prendre en sandwich. Ces platines peuvent être raccordées aux piquet 10 de sorte à coulisser le long desdits piquet 10 afin de pouvoir régler la hauteur du moyen de fixation 8 ainsi formé. Les platines formant le moyen de fixation 8 peuvent comme les platines 12, avoir une forme elliptique, notamment circulaire, ou bien une forme polygonale, notamment une forme carrée.

Alternativement, le moyen de fixation 8 peut se présenter sous la forme d'une pince ou d'un clip ou tout autre moyen qui garantit l'étanchéité de l'installation 1 au niveau des orifices 14 dans les modules photovoltaïques 4 lorsque ledit moyen de fixation 8 prend en sandwich la portion du collecteur d'eau 6 et du ou des bords latéraux des au moins deux modules photovoltaïques 4.

Le moyen de fixation 8 peut être fait dans un matériau plastique ou dans un métallique inoxydable. D'autres matériaux peuvent également être envisagés pour le moyen de fixation.

Les portions du collecteur d'eau 6 sont situées en dessous du ou des bords latéraux d'au moins un des deux modules photovoltaïques 4, ceci permet d'assurer l'étanchéité de l'installation 1, notamment dans le cas où les modules 4 présentent des orifices 14 traversants comme dans le mode de réalisation décrit précédemment.

Selon un mode de réalisation particulier, le collecteur d'eau 6 est une membrane souple et étanche. La souplesse de la membrane facilite son transport, notamment dans le cas où ladite membrane se présente sous la forme de bandes enroulées en rouleau. Une telle membrane souple permet également une manipulation aisée de celle-ci au cours de la mise en place de l'installation photovoltaïque sur le terril de déchets.

Plus précisément, chaque collecteur d'eau 6 de l'installation photovoltaïque peut se présenter sous la forme d'une bande de membrane souple et étanche. On entend par « bande » une portion de membrane souple et étanche qui présente une longueur de dimension supérieure à sa largeur.

Ainsi, selon le mode de réalisation illustré sur les figures 1 et 2, les longueurs d'une bande de membrane qui forme le collecteur d'eau 6 sont reliés aux bords les plus longs de deux modules photovoltaïques adjacents de sorte que la longueur de la bande de membrane formant le collecteur d'eau 6 est orientée dans le sens de la pente.

La souplesse de la membrane permet d'arquer celle-ci de sorte qu'elle soit courbée vers le sol incliné 2 sur lequel est agencée la structure de support de l'installation photovoltaïque 1. La membrane forme ainsi une sorte de gouttière configurée pour collecter l'eau de pluie ruisselant sur les modules photovoltaïques 4 de l'installation 1. En se référant à la figure 1, la portion de la bande de membrane illustrée sur cette figure est courbée vers le sol 2 et correspond à la largeur de ladite bande de membrane qui forme le collecteur d'eau 6.

La membrane est imperméable. L'étanchéité de cette membrane permet d'éviter une infiltration de l'eau de pluie dans le monticule, ceci évite d'affecter la qualité des eaux souterraines du fait de la potentielle présence d'éléments contaminants dans ces résidus. Une telle membrane peut notamment se présenter sous la forme d'une membrane d'étanchéité bitumineuse. Une telle membrane d'étanchéité bitumineuse présente un avantage économique. Elle est par ailleurs très résistante aux déchirements et aux intempéries, ce qui favorise son utilisation dans le cadre de la mise en place d'une installation photovoltaïque 1 telle que décrite dans cette demande.

Selon un autre mode de réalisation, la membrane peut comporter un ou plusieurs polymère(s), tel que du polyéthylène (PE), bitume, polyoléfine (TPO), éthylène-propylène-diène (EPDM) ou polychlorure de vinyle (PVC). Ces matériaux polymères peuvent éventuellement être armés de fibres et/ou être multicouches.

Dans ce mode de réalisation, les bords d'un collecteur d'eau 6 formé par une bande de membrane souple et étanche sont reliés aux bords de deux modules photovoltaïques 4 adjacents par l'intermédiaire des moyens de fixation 8.

Selon le mode de réalisation illustré sur les figures 1 et 2, quatre piquets 10 équipés chacun d'un moyen de fixation 8 assurent la jonction entre le collecteur d'eau 6 formé par la bande de membrane souple et étanche et les bords des deux modules photovoltaïques 4 adjacents. Ainsi, chaque module photovoltaïque 4 de l'installation 1 est supporté par quatre piquets 10.

Selon un mode de réalisation illustré sur la figure 3, le collecteur d'eau 6 destiné à canaliser de l'eau de pluie peut présenter sur au moins une partie de sa périphérie des portions 16 collantes ou adhésives destinées à être collées ou pressées sur au moins un bord d'un des deux modules photovoltaïques 4 adjacents, tandis qu'une portion 18 non collante ou non adhésive du collecteur d'eau 6 est située dans l'écart entre les deux modules photovoltaïques 4 adjacents.

De telles portions 16 collantes ou adhésives assurent un meilleur maintien du collecteur d'eau 6 aux bords des deux modules photovoltaïques 4 adjacents. Une telle solidarisation du collecteur d'eau 6 aux bords des deux modules photovoltaïques 4 adjacents peut également contribuer à garantir l'étanchéité de l'installation photovoltaïque 1.

Pour des soucis de clarté, les piquets 10 et le moyen de maintien 8 ne sont pas représentés sur la figure 3.

Selon un autre mode de réalisation, le collecteur d'eau 6 peut comprendre une goulotte rigide ou semi-rigide. Ce mode de réalisation est notamment illustré sur la figure 4.

Dans ce mode de réalisation particulier, on entend par « rigide ou semi-rigide » que la goulotte qui forme au moins partiellement le collecteur d'eau 6 n'est pas aussi flexible que dans le mode de réalisation précédent où le collecteur d'eau 6 se présente sous la forme d'une bande de membrane. La goulotte est par exemple moins malléable qu'un lès de membrane. Une structure rigide pour la goulotte peut conférer plus de stabilité à l'installation photovoltaïque tout en assurant la collecte des eaux de pluie pour éviter que celles-ci ne s'infiltrent dans le sol incliné. Cela peut également permettre de réduire le nombre de piquets 10 nécessaire.

Selon une variante de ce mode de réalisation, la goulotte forme une structure monobloc avec l'un des deux modules photovoltaïques 4 adjacents entre lesquels la goulotte est agencée. Dans ce cas, la goulotte est solidaire du module photovoltaïque 4.

Selon le mode de réalisation illustré sur la figure 4, deux piquets 10 équipés chacun d'un moyen de fixation 8 assurent la jonction entre la goulotte rigide ou semi-rigide qui forme le collecteur d'eau 6 et les bords des deux modules photovoltaïques 4 adjacents. Ainsi, chaque module photovoltaïque solidaire d'une telle goulotte de l'installation est supporté par deux piquets 10. Ce mode de réalisation permet de limiter le nombre de piquets 10 requis pour assurer la mise en place et le maintien de la structure de support pour l'installation 1.

Une telle installation photovoltaïque 1 peut plus particulièrement comprendre plusieurs rangées de modules photovoltaïques 4. Dans cette configuration, les modules photovoltaïques 4 d'une rangée supérieure dans le sens de la pente du sol incliné 2 chevauchent partiellement les modules 4 d'une rangée inférieure. Autrement dit, les rangées de modules photovoltaïques 4 peuvent être agencées comme les tuiles d'un toit. Une telle configuration des modules photovoltaïques 4 permet aux eaux de pluie de s'écouler dans le sens de la pente du sol incliné 2 sur les modules 4 et dans les collecteurs d'eau 6 disposés entre les modules 4 tout en évitant une infiltration de cette eau dans le monticule. Ceci est notamment illustré sur la figure 2.

Par ailleurs, les bords latéraux des modules photovoltaïques 4 agencés en périphérie de l'installation peuvent être liés à une membrane d'étanchéité 20 qui peut être fixée au sol 2 par tout moyen, tel que des crochets ou des poids. La membrane d'étanchéité 20 est ainsi maintenue en place, ce qui permet d'éviter qu'elle ne soit emportée par un coup de vent.

Afin d'éviter d'avoir recours à des moyens de fixation supplémentaires pour fixer la membrane d'étanchéité 20 au sol incliné 2, celle-ci peut être partiellement enterrée pour assurer son maintien.

## Revendications

1. Installation photovoltaïque (1) destinée à recouvrir au moins partiellement un sol incliné (2), l'installation photovoltaïque (1) comportant au moins deux modules photovoltaïques (4) adjacents supportés par une structure de support, **caractérisée en ce qu'**au moins une partie des bords des modules photovoltaïques (4) sont reliés entre eux par un collecteur d'eau (6) orienté dans le sens de la pente du sol incliné (2), ledit collecteur d'eau (6) étant destiné à canaliser de l'eau de pluie ; et **en ce que** la structure de support comporte d'une part des piquets (10) avec un élément en appui (12) qui est en contact avec le sol incliné (2) et d'autre part un moyen de fixation (8) qui raccorde une portion du collecteur d'eau (6) avec un bord latéral d'au moins un des au moins deux modules photovoltaïques (4), ladite portion du collecteur d'eau (6) étant située en dessous du bord latéral du au moins un des deux modules photovoltaïques (4).

2. Installation photovoltaïque (1) selon la revendication 1, **caractérisée en ce que** le moyen de fixation (8) comprend deux platines (8) situées de part et d'autre de la portion du collecteur d'eau (6) et d'un ou des bords latéraux du au moins un des deux modules photovoltaïques (4) de manière à les prendre en sandwich.

3. Installation photovoltaïque (1) selon l'une des revendications précédentes **caractérisée en ce que** l'élément en appui (12) est une platine qui est en contact avec le sol incliné (2) et est inclinable par rapport au piquet (10) auquel elle est associée.

4. Installation photovoltaïque (1) selon l'une des revendications précédentes, **caractérisée en ce que** les bords des au moins deux modules photovoltaïques (4) présentent des orifices (14) traversants et **en ce que** les piquets (10) de la structure de support passent à travers lesdits orifices (14).

5. Installation photovoltaïque (1) selon la revendication précédente, **caractérisée en ce que** les orifices (14) sont situés dans les coins des modules photovoltaïques (4).

6. Installation photovoltaïque (1) selon les revendications 4 ou 5, **caractérisée en ce que** les orifices (14) sont obtenus par perçage des modules photovoltaïques (4).

7. Installation photovoltaïque (1) selon l'une des revendications précédentes, **caractérisée en ce que** le collecteur d'eau (6) comprend une membrane souple et étanche.

8. Installation photovoltaïque (1) selon la revendication 7, **caractérisée en ce que** la membrane d'étanchéité comprend une membrane d'étanchéité bitumineuse.

9. Installation photovoltaïque (1) selon l'une quelconque des revendications 7 à 8, **caractérisée en ce que** la membrane forme une gouttière.

10. Installation photovoltaïque (1) selon l'une quelconque des revendications 1 à 5, **caractérisée en ce que** le collecteur d'eau (6) comprend une goulotte rigide ou semi-rigide.

11. Installation photovoltaïque (1) selon la revendication précédente, **caractérisée en ce que** la goulotte forme une structure monobloc avec l'un des deux modules photovoltaïques (4) adjacents entre lesquels le collecteur d'eau (6) est agencé.

12. Installation photovoltaïque (1) selon la revendication 10, **caractérisée en ce que** la goulotte présente des ouvertures sur une partie de sa périphérie et **en ce que** les piquets (10) de la structure de support passent à travers ces ouvertures.

13. Installation photovoltaïque (1) selon l'une quelconque des revendications précédentes, **caractérisée en ce que** le collecteur d'eau (6) destiné à canaliser de l'eau de pluie présente sur au moins une partie de sa périphérie des portions (16) collantes ou adhésives destinées à être collées ou pressées sur au moins un bord d'un des deux modules photovoltaïques (4) adjacents, et **en ce qu'**une portion (18) non collante ou non adhésive du collecteur d'eau (6) est située dans l'écart entre les deux modules photovoltaïques (4) adjacents.

14. Installation photovoltaïque (1) selon l'une des revendications précédentes, **caractérisée en ce que** les bords latéraux des modules photovoltaïques (4) agencés en périphérie de l'installation (1) sont liés à une membrane étanche (20) qui peut être fixée au sol incliné (2) par tout moyen, tel que des crochets ou des poids, ou enterrée.

15. Installation photovoltaïque (1) selon l'une des revendications précédentes, **caractérisée en ce qu'**elle comprend plusieurs rangées de modules (4) et **en ce que** les modules (4) d'une rangée supérieure dans le sens de la pente du sol incliné (2) chevauchent partiellement les modules (4) d'une rangée inférieure.
